# EUROPÄISCHE PATENTSCHRIFT

(11) **EP 1 989 082 B1**
(45) Veröffentlichungstag und Bekanntmachung des Hinweises auf die Patenterteilung: **17.08.2011**
(21) Anmeldenummer: 06805691.0
(22) Anmeldetag: 12.09.2006
(51) Int. Cl.: B60R 21/34

(54) **KAROSSERIE FÜR EIN KRAFTFAHRZEUG**
BODY FOR A MOTOR VEHICLE
CARROSSERIE D'UN VEHICULE AUTOMOBILE

(30) Priorität: 15.09.2005 DE 102005044079
(43) Veröffentlichungstag der Anmeldung: 12.11.2008
(73) Patentinhaber: GM Global Technology Operations LLC, Detroit, MI 48265-3000 (US)
(72) Erfinder: SCHEUCH, Volker, 63877 Sailauf (DE); SCHMIDT, Werner, 63755 Alzenau (DE); SCHÄFER, Joachim, 64297 Darmstadt (DE); ZILG, Martin, 63741 Aschaffenburg/Nilkheim (DE)
(74) Vertreter: Strauss, Peter
(86) Internationale Anmeldenummer: PCT/EP2006/008859
(87) Internationale Veröffentlichungsnummer: WO 2007/031267

(56) Entgegenhaltungen:
- DE-A1- 10 235 630
- DE-A1- 10 331 047
- DE-A1-102004 056 122
- GB-A- 2 382 549

## Beschreibung

Die vorliegende Erfindung betrifft eine Karosserie für ein Kraftfahrzeug nach dem Oberbegriff des Anaspruchs 1. Eine solche Karosserie ist aus GB 2382549 A bekannt.

Wenn bei dieser bekannten Karosserie die Haube angehoben wird, um bei einem Unfall einen Fußgänger aufzufangen, und dazu das Haubenschloss entriegelt wird, folgt der Hebel einem Mitnehmer des Stellgliedes nur ein Stück weit. Wenn die Auslenkung des Hebels groß genug und die Haube entriegelt ist, gleitet der Hebel von dem Mitnehmer ab und blockiert so den Weg des Mitnehmers zurück in seine Ausgangsposition, so dass die Kopplung zwischen Stellglied und Riegel nicht wiederhergestellt wird.

Aufgabe der vorliegenden Erfindung ist, eine Karosserie der eingangs genannten Art zu schaffen, die eine Wiederherstellung der Kopplung zwischen Riegel und Mitnehmer bei Rückkehr der Haube in ihre Normalposition ermöglicht.

Die Aufgabe wird gelöst durch eine Karosserie mit den Merkmalen des Anspruchs 1. Der zweiteilige Aufbau erlaubt es dem Hebel, im Laufe der Aufwärtsbewegung der Haube von einem das Drehmoment ausübenden Element abzugleiten, so dass die Aufwärtsbewegung der Haube nicht durch eine evtl. begrenzte Beweglichkeit des Hebels oder des Riegels eingeschränkt ist, die Kopplung aber wiederherzustellen, wenn die Haube in ihre Normalposition zurückbewegt wird.

Indem das Stellglied an einer vom Haubenschloss entfernten Seite der Haube angreift, kann es beginnen, die Haube anzuheben, ohne dass bereits die Entriegelung des Haubenschlosses stattgefunden haben muss. Dadurch ist es auch möglich, die Entriegelung des Haubenschlosses an das mit der Haube bewegliche Teil des Stellgliedes zu koppeln, während ein anderes Teil des Stellgliedes fest am Rahmen verankert sein darf.

Vorzugsweise sind der Riegel und das Stellglied ferner über ein Zugkabel gekoppelt. Ein solches Zugkabel ist preiswert realisierbar und hat eine geringe träge Masse, so dass es die Ausfahrbewegung des Stellgliedes nicht nennenswert verzögert.

Vorzugsweise erstreckt sich das Zugkabel von dem Haubenschloss über das an dem Angriffspunkt angreifende Stück hinaus bis zu einem Entriegelungshebel. Dieser kann in an sich bekannter Weise zum normalen Entriegeln der Haube vorgesehen und insbesondere in einer Fahrgastzelle des Fahrzeuges angeordnet sein.

Um eine Entriegelung des Haubenschlosses sowohl über den Entriegelungshebel als auch über das Stellglied zu ermöglichen, ist das an dem Angriffspunkt angreifende Stück des Zugkabels zweckmäßigerweise in eine einer Entriegelung des Haubenschlosses entsprechenden Richtung frei gegen den Angriffspunkt verschiebbar.

Der Angriffspunkt kann in diesem Fall eine Öse sein, durch die das Zugkabel geführt ist, und das Zugkabel weist eine bei einem Ausfahren des Stellgliedes von der Öse mitgenommene Verdickung auf.

Alternativ besteht die Möglichkeit, dass das Zugkabel über zwei karosseriefeste Punkte beiderseits des an die Bewegung des Stellgliedes gekoppelten Angriffspunktes verläuft und der Weg des Kabels zwischen den karosseriefesten Punkten über den Angriffspunkt sich durch die Ausfahrbewegung des Stellgliedes verlängert.

Weitere Merkmale und Vorteile der Erfindung ergeben sich aus der nachfolgenden Beschreibung von Ausführungsbeispielen unter Bezugnahme auf die beigefügten Figuren. Es zeigen:
- Fig. 1: eine perspektivische Ansicht eines Kraftfahrzeuges;
- Fig. 2: einen Längsschnitt durch die Motorhaube des Fahrzeuges aus Fig. 1 im geschlossenen Zustand;
- Fig. 3: einen Schnitt durch die Motorhaube der Fig. 2 während eines Anhebevorganges;
- Fig. 4: die Motorhaube aus Fig. 2 im vollständig angehobenen Zustand;
- Fig. 5 und 6: jeweils Abwandlungen des Aufbaues der Fig. 2;
- Fig. 7: eine weitere Abwandlung in einem schematischen Schnitt;
- Fig. 8: eine Variante der weiteren Abwandlung, ebenfalls in einem schematischen Schnitt;
- Fig. 9: einen Längsschnitt durch die Motor- haube des Fahrzeuges aus Fig. 1 gemäß einer ersten Ausgestaltung der Erfindung im geschlossenen Zustand;
- Fig. 10: den hinteren Bereich der Haube aus Fig. 9 im angehobenen Zustand;
- Fig. 11: den hinteren Bereich der Haube aus Fig. 9 während des Absenkens; und
- Fig. 12: einen Längsschnitt durch die Motor- haube des Fahrzeuges gemäß einer zweiten Ausgestaltung.

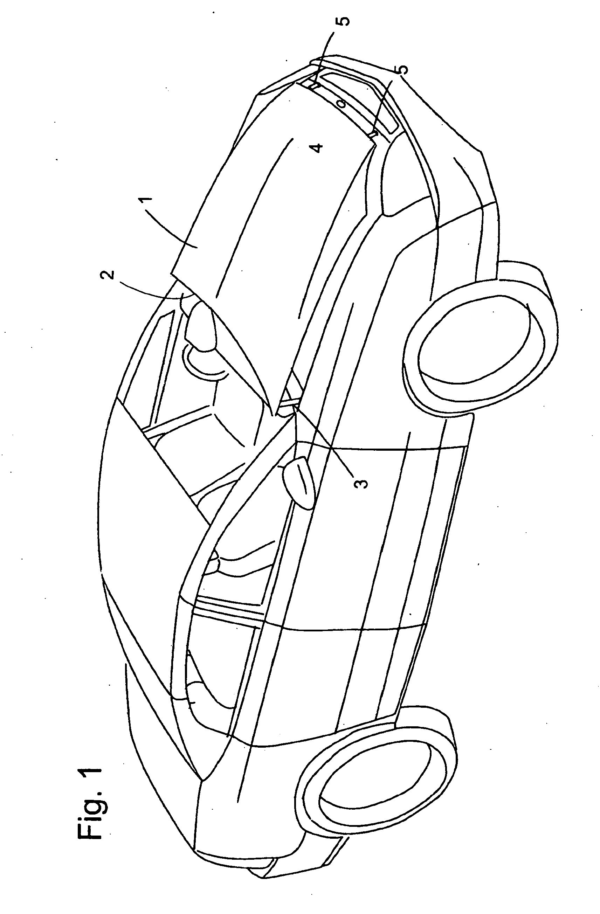

Fig. 1 ist eine Ansicht eines Kraftfahrzeuges mit einer nicht erfindungsgemäßen Karosserie. Eine Motorhaube 1 der Karosserie ist in einem angehobenen Zustand dargestellt, in welchem sie durch benachbart zur hinteren Kante 2 der Haube 1 angreifende Stellglieder 3 und benachbart zur vorderen Kante 4 angreifende Stellglieder 5 von einem darunter verborgenen Motorblock beabstandet gehalten ist, um den Bremsweg für einen auf die Haube 1 aufschlagenden Fußgänger zu vergrößern.

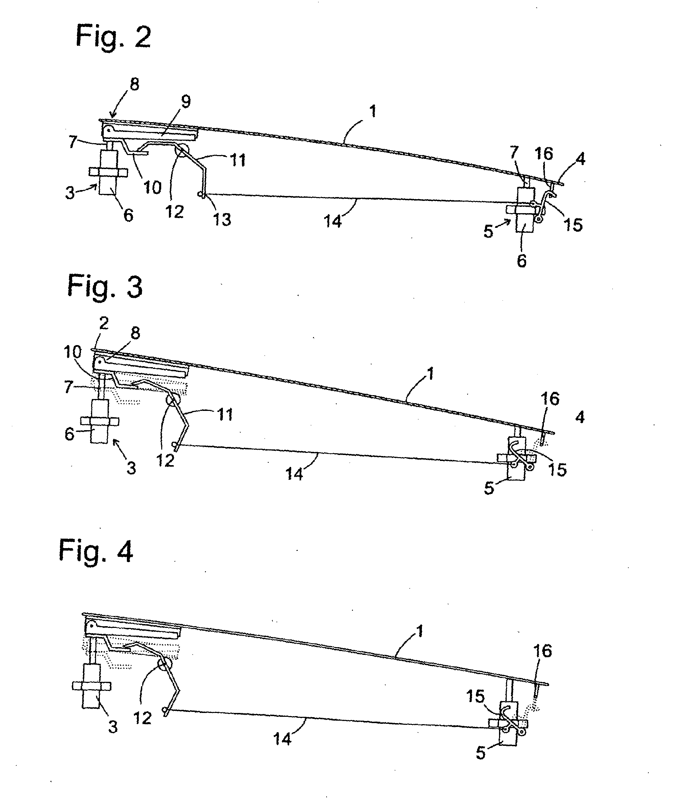

Fig. 2 zeigt einen Schnitt durch die Motorhaube 1 in einer normalen, geschlossenen Stellung, in welcher die Motorhaube 1 mit benachbarten Kotflügeln der Karosserie bündig ist. Von den paarweise vorhandenen Stellgliedern 3, 5 ist in Fig. 2 jeweils eines gezeigt. Die Stellglieder 3, 5 umfassen jeweils einen an einem nicht dargestellten Rahmen der Karosserie ortsfesten Zylinder 6 und einen beweglichen Kolben 7, der im Falle des vorderen Stellgliedes 5 direkt und im Falle des hinteren Stellgliedes 3 über ein Scharnier 8 an der Motorhaube angreift. Ein unterer Schenkel 9 des Scharniers 8 ist, solange das Stellglied 3 nicht betätigt wird, unbeweglich in Bezug auf den Rahmen und wird deshalb auch als ortsfester Schenkel bezeichnet. Mit dem ortsfesten Schenkel 9 ist ein Arm 10 starr verbunden, der an einer Seite eines zweiarmigen Hebels 11 angreift. Der Hebel 11 ist um einen am Rahmen ortsfesten Angelpunkt 12 schwenkbar und sein zweites Ende bildet einen Angriffspunkt 13 für ein Zugkabel 14. Dieses Zugkabel 14 greift an einem schwenkbaren Riegel 15 an, der in der in Fig. 2 gezeigten Stellung in einen von der vorderen Kante 4 der Haube 1 abstehenden Bügel 16 eingreift und so die Haube 1 in der geschlossenen Stellung verriegelt.

Wenn in an sich bekannter Weise eine Unfallsituation erfasst wird, werden unverzüglich die hinteren Stellglieder 3 aktiviert, um die Haube 1 anzuheben. Wie in Fig. 3 gezeigt, wird bei dieser Aufwärtsbewegung durch den Arm 10 der Hebel 11 gedreht, und durch den resultierenden Zug auf dem Zugkabel 14 löst sich der Riegel 15 aus dem Bügel 16. Mit einer vorgegebenen, für diese Entriegelung ausreichenden Verzögerung gegenüber den hinteren Stellgliedern 3 werden auch die vorderen Stellglieder 5 aktiviert, um die vordere Kante 4 der Haube anzuheben, wie in Fig. 4 gezeigt.

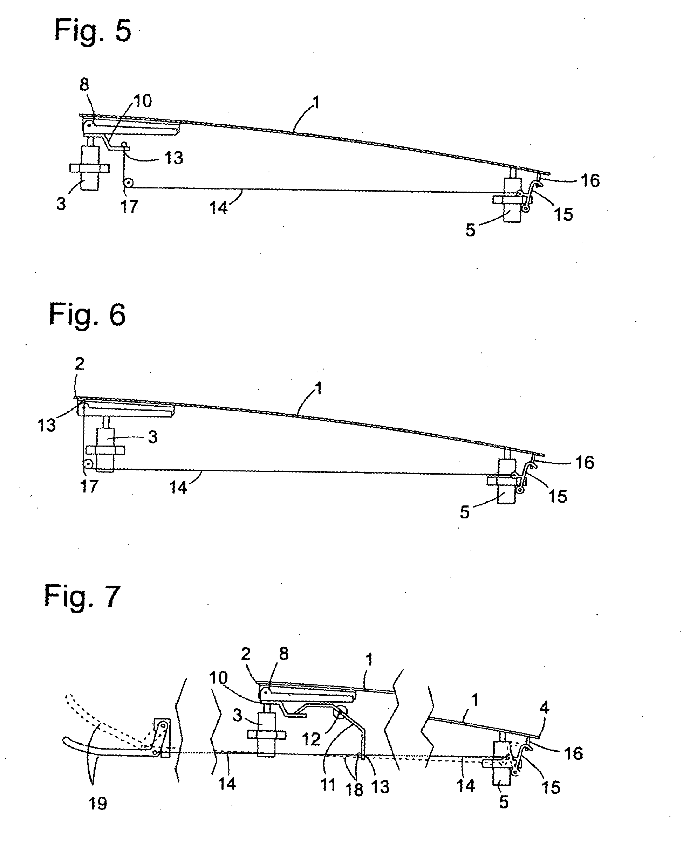

Fig. 5 zeigt in einer zu Fig. 2 analogen Darstellung eine abgewandelte Ausgestaltung, in welcher der Hebel 11 durch eine Umlenkrolle 17 ersetzt ist und das Zugkabel 14 sich zwischen seinem hier an dem Arm 10 gebildeten Angriffspunkt 13 und dem Riegel 15 über die Umlenkrolle 17 erstreckt. Die Funktionsweise dieser Abwandlung ist die gleiche wie mit Bezug auf Figuren 2 bis 4 beschrieben. Da gleiche gilt für die Abwandlung der Fig. 6, die sich von Fig. 5 dadurch unterscheidet, dass der Angriffspunkt 13 des Zugkabels 14 sich unmittelbar an der hinteren Kante 2 der Motorhaube 1 befindet.

Eine auf der Ausgestaltung der Figuren 2 bis 4 basierende Abwandlung ist in Fig. 7 gezeigt. Teile dieser Abwandlung, die denen der Ausgestaltung von Fig. 2 bis 4 entsprechen, sind mit den gleichen Bezugszeichen versehen und werden nicht erneut beschrieben. Der Angriffspunkt 13 des Zugkabels 14 an dem Hebel 11 ist hier durch eine Öse gebildet, durch die das Zugkabel 14 verläuft. An der vom Riegel 15 abgewandten Seite der Öse ist an dem Zugkabel 14 eine Perle 18 befestigt, über die das Zugkabel mitgezogen wird, wenn sich beim Ausfahren des hinteren Stellgliedes 3 der Hebel 11 dreht. Das Zugkabel 14 erstreckt sich jedoch über die Perle 18 hinaus bis zu einem Entriegelungshebel 19, der in der Fahrgastzelle des Fahrzeuges angebracht ist. Durch Schwenken dieses Entriegelungshebels in seine in Fig. 7 gestrichelt dargestellte Stellung wird das Zugkabel 14 in der Figur nach links gezogen, wobei es in der Öse 13 gleitet und die Perle 18 sich vom Angriffspunkt 13 entfernt: So wird der Riegel 15 vom Bügel 16 getrennt, und die Motorhaube kann im Scharnier 8 hochgeklappt werden, um auf den Motorraum zuzugreifen. Es ist also ein und dasselbe Zugkabel 14, das eine normale Entriegelung des Haubenschlosses zum Öffnen der Motorhaube 1 als auch die Entriegelung zum Anheben der Haube 1 bei einem Unfall antreibt.

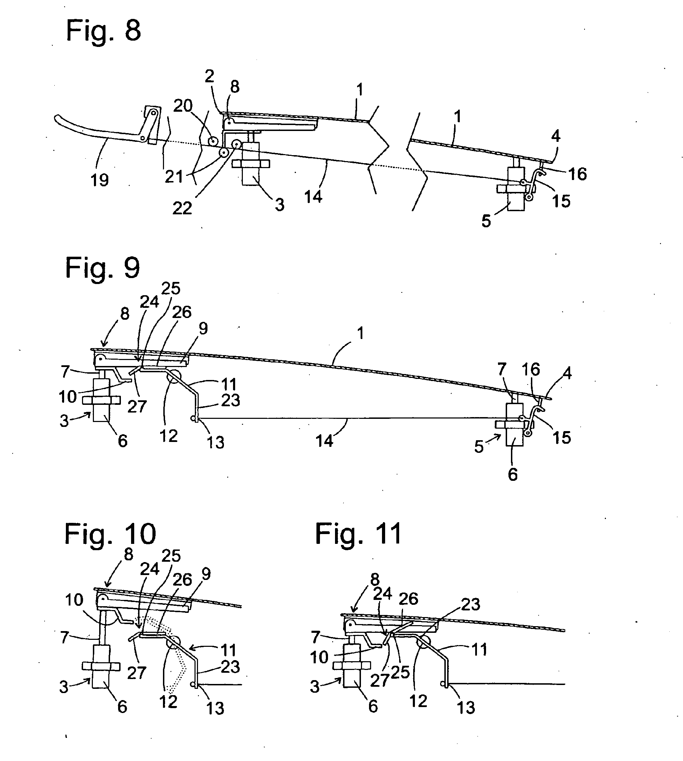

Fig. 8 zeigt eine weitere Abwandlung, die mit derjenigen der Fig. 7 gleichwirkend ist. Das Zugkabel 14 erstreckt sich hier zwischen dem Entriegelungshebel 19 und dem Riegel 15 über drei Umlenkrollen 20, 21, 22, von denen die zwei äußeren 20, 22 am Rahmen ortsfest sind und die mittlere 21 am Scharnier 8 befestigt ist. Während in der normalen Konfiguration der Fig. 8, bei nicht angehobener Haube 1, das Kabel zwischen den Rollen 20, 22 im Wesentlichen gradlinig verläuft, wird es durch ein Ausfahren des hinteren Stellgliedes 3 auf einen nicht geradlinigen, verlängerten Weg gezwungen, mit der Folge, dass der Riegel 15 zurückgezogen und das Haubenschloss so geöffnet wird.

Die für die oben beschriebenen Ausgestaltungen verwendeten Stellglieder 3, 5 können an sich von beliebigem Typ sein. Bevorzugt sind jedoch reversierbare Stellglieder, das heißt solche, die nach dem Ausfahren durch einen Benutzereingriff in einen eingefahrenen, erneut aktivierbaren Zustand versetzt werden können. Ein solches Stellglied ist zum Beispiel in DE 103 08 140 B3 beschrieben, so dass an dieser Stelle auf seinen Aufbau nicht im Detail eingegangen werden muss. Wenn ein solches Stellglied in seinen Ausgangszustand zurückversetzt wird, ist automatisch auch eine Verriegelung des Haubenschlosses wieder möglich. Das heißt, dass nach einem Unfall, sofern das Fahrzeug noch fahrbereit ist, die Motorhaube 1 in ihre Normalstellung zurückgebracht werden kann und das Fahrzeug weiter verwendet werden kann, ohne dass ein Eingriff durch spezialisiertes Personal abgewartet werden muss.

Eine Ausgestaltung der Erfindung wird anhand der Fig. 9 bis 11 erläutert. Fig. 9 ist ein zu Fig. 2 analoger Schnitt durch die Motorhaube 1 in geschlossener Stellung. Die Ausgestaltung der Fig. 9 unterscheidet sich von derjenigen der Fig. 2 im wesentlichen durch den Hebel 11 und durch die Reversierbarkeit der Stellglieder 3, 5. Während der Hebel 11 in der Ausgestaltung der Fig. 2 einstückig ausgeführt ist, besteht er gem. Fig. 9 aus zwei Teilen, als vorderes Teil 23 bzw. hinteres Teil 24 bezeichnet, die durch ein Gelenk 25 schwenkbar verbunden sind. Das vordere Teil 23 bildet den vorderen Arm des Hebels 11, vom Angelpunkt 12 bis zum Angriffspunkt 13 des Zugkabels 14, sowie einen Teil des hinteren Arms, der an seinem Ende das Gelenk 25 trägt. Das an dem Gelenk 25 aufgehängte hintere Teil 24 bildet seinerseits einen zweiarmigen Hebel mit einem vorderen Arm 26, der in der gezeigten Konfiguration auf dem vorderen Teil 23 aufliegt, und einem hinteren Arm 27, der oberhalb des mit dem Stellglied 5 beweglichen Arms 10 endet, ohne diesen zu berühren.

Wenn das Stellglied 3 die Motorhaube 1 anhebt, stößt der Arm 10 von unten gegen den Arm 27 des hinteren Teils 24. Da dessen vorderer Arm 26 an dem vorderen Teil 23 aufliegt, kann er im Gelenk 25 nicht schwenken, so dass der Hebel 11 als Ganzes bis in die in Fig. 10 als punktierter Umriss gezeigte Stellung geschwenkt wird. Hierbei nimmt der Hebel 11, wie bereits beschrieben, das Zugkabel 14 mit und zieht so am vorderen Rand der Motorhaube den Riegel 15 aus dem Bügel 16 heraus.

Mit Fortschreiten der Aufwärtsbewegung des Stellglieds 3 gleitet schließlich der hintere Arm 27 von dem Arm 10 ab, so dass die Entriegelungsbewegung zum Stillstand kommt. Die begrenzte Bewegungsfreiheit des Riegels 15 kann nun die Aufwärtsbewegung der Motorhaube 1 nicht mehr behindern, so dass eine Anhebung der hinteren Kante 2 der Motorhaube 1 von 10 cm oder mehr leicht realisierbar ist. Der Hebel 11 kehrt nach Abgleiten von dem Arm 10 in seine in Fig. 10 durchgezogen gezeigte Ruhestellung zurück.

Wenn später das Stellglied 3 reversiert wird, der Arm 10 sich aus der in Fig. 10 gezeigten Stellung also wieder abwärts bewegt, so stößt er von oben gegen den hinteren Arm 27. Das hintere Teil 24 gibt dem Druck des Arms 10 nach, indem es, wie in Fig. 11 gezeigt, in dem Gelenk 25 schwenkt. Dabei wird der vordere Arm 26 von dem vorderen Teil 23 abgehoben. Sobald der Arm 10 auf seiner Abwärtsbewegung die Spitze des hinteren Arms 27 passiert hat, schwenkt das hintere Teil 24 unter dem Gewicht seines vorderen Arms 26 zurück in seine in Fig. 9 gezeigte Normalstellung, aus der heraus es erneut die Haube 1 entriegeln kann, wenn das Stellglied 3 angehoben wird.

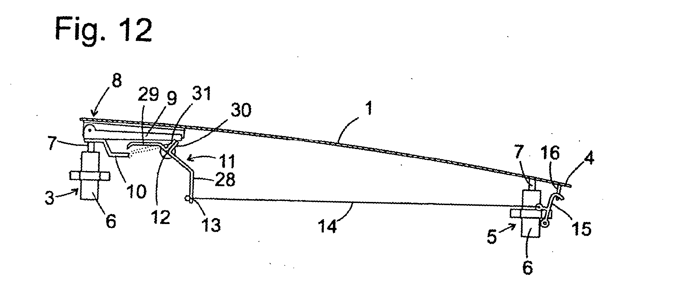

Eine Abwandlung, die eine ähnliche Wirkung wie die Ausgestaltung der Fig. 9 bis 11 erreicht, ist in Fig. 12 in einem schematischen Schnitt dargestellt. Diese Ausgestaltung unterscheidet sich von derjenigen der Figs. 9 bis 11 im wesentlichen nur durch den Hebel 11. Dieser ist hier in einen vorderen Teil 28 und einen hinteren Teil 29 gegliedert, die im Angelpunkt 12 gelenkig miteinander verbunden sind und jeweils einen Arm des Hebels 11 bilden. Die Teile 28, 29 weisen jeweils einen vom Angelpunkt 12 abstehenden Vorsprung 30 bzw. 31 auf, die in der in Fig. 12 gezeigten Normalstellung der Motorhaube 1 durch eine nicht dargestellte Feder gegeneinander gedrückt gehalten sind. Wenn beim Ausfahren des Stellgliedes 3 der Arm 10 gegen die Spitze des hinteren Teils 29 stößt und beginnt, ein Drehmoment auf dieses auszuüben, wird dieses über die Vorsprünge 30, 31 auf das vordere Teil 28 übertragen, wodurch das Zugkabel 14 zurückgezogen wird und der Riegel 15 aus dem Bügel 16 ausrückt. Der hintere Teil 29 gleitet von dem Arm 10 ab, bevor das Stellglied 3 seine obere Anschlagstellung erreicht.

Wenn das Stellglied 3 reversiert wird und der Arm 10 von oben gegen das hintere Teil 29 stößt, wird dieses mitgenommen und entgegen der Kraft der nicht dargestellten Feder geschwenkt, ohne dass das vordere Teil 28 der Schwenkbewegung folgt. Wenn schließlich im Lauf der Reversierungsbewegung des Stellgliedes 3 das hintere Teil 29 den Arm 10 passiert, wie in Fig. 12 als punktierter Umriss gezeigt, kehrt das Teil 29 durch die Kraft der Feder in die durchgezogen dargestellte Normalstellung zurück.

Selbstverständlich kann bei den Ausgestaltungen der Figs. 9 bis 11 bzw. 12 zusätzlich auch eine manuelle Entriegelung des Haubenschlosses durch ein bis zu einem Entriegelungshebel 19 in der Fahrgastzelle verlängertes Zugkabel 14, wie mit Bezug auf Fig. 7 beschrieben, vorgesehen werden.

## Patentansprüche

1. Karosserie für ein Kraftfahrzeug mit einem Rahmen und einer an einer ersten Seite (2) mit dem Rahmen durch ein Scharnier (8) und an einer zweiten Seite (4) durch ein Haubenschloss (15, 16) verbundenen Haube (1) und wenigstens einem Stellglied (3), das zum Anheben der Haube (1) bei einem Unfall ausfahrbar ist und ein an der ersten Seite (2) der Haube (1) angreifendes bewegliches Teil (7, 10) umfasst, wobei ein Riegel (15) des Haubenschlosses (15, 16) an das bewegliche Teil (7, 10) über einen schwenkbaren Hebel (11) gekoppelt ist, um bei einem Ausfahren dieses Stellglieds (3) das Haubenschloss (15, 16) zu entriegeln, **dadurch gekennzeichnet, dass** der Hebel (11) zwei durch ein Gelenk (25; 12) schwenkbar verbundene Teile (23, 24; 28, 29) umfasst, von denen das erste (24; 29) ein von dem beweglichen Teil (7, 10) des Stellglieds beim Anheben der Motorhaube (1) ausgeübtes Drehmoment über einen Anschlag des Gelenks (25;12) an das zweite Teil (23; 28) überträgt und unter einem bei einem Absenken der Haube (1) in entgegengesetzter Richtung ausgeübten Drehmoment in dem Gelenk (25; 12) schwenkt..

2. Karosserie nach Anspruch 1, **dadurch gekennzeichnet, dass** der Riegel (15) an das Stellglied (3) ferner über ein Zugkabel (14) gekoppelt ist.

3. Karosserie nach Anspruch 1 oder 2, **dadurch gekennzeichnet, dass** beide Teile (23, 24; 28, 29) des Hebels (11) gemeinsam um einen Angelpunkt (12) schwenkbar sind, und dass das Gelenk (25) näher an einem Angriffspunkt des beim Anheben der Motorhaube (1) ausgeübten Drehmoments an dem ersten Teil (24) ist als der Angelpunkt (12).

4. Karosserie nach Anspruch 2, **dadurch gekennzeichnet, dass** ein Stück des Zugkabels (14) an einem Angriffspunkt (13) des Hebels (11) angreift.

5. Karosserie nach Anspruch 4, **dadurch gekennzeichnet, dass** das Zugkabel (14) sich von dem Haubenschloss (15, 16) über das Stück hinaus bis zu einem Entriegelungshebel (19) erstreckt.

6. Karosserie nach Anspruch 5, **dadurch gekennzeichnet, dass** das Stück des Zugkabels in eine einer Entriegelung des Haubenschlosses (15, 16) entsprechenden Richtung frei gegen den Angriffspunkt (13) verschiebbar ist.

7. Karosserie nach Anspruch 6, **dadurch gekennzeichnet, dass** der Angriffspunkt (13) eine Öse ist, durch die das Zugkabel (14) geführt ist, und dass das Zugkabel (14) eine bei einem Ausfahren des Stellgliedes (3) von der Öse mitgenommene Verdickung (18) aufweist.

8. Karosserie nach einem der vorhergehenden Ansprüche, **dadurch gekennzeichnet, dass** das Stellglied (3) reversierbar ist.

## Claims

1. A body for a motor vehicle having a frame and a bonnet (1) connected to the frame on a first side (2) by a hinge (8) and on a second side (4) by a bonnet latch (15, 16) and at least one actuator (3), which may be extended to lift the bonnet (1) in the event of an accident and comprises a mobile part (7, 10) acting on the first side (2) of the bonnet (1), a latching bolt (15) of the bonnet latch (15, 16) being coupled to the mobile part (7, 10) via a swivellable lever (11) in order to unlock the bonnet latch (15, 16) on extension of said actuator (3), **characterised in that** the lever (11) comprises two parts (23, 24; 28, 29) connected swivellably by a joint (25; 12), the first (24; 29) of which parts transmits a torque exerted by the mobile part (7, 10) of the actuator on lifting of the bonnet (1) beyond a limit stop of the joint (25; 12) to the second part (23; 28) and swivels in the joint (25; 12) under the action of a torque exerted in the opposite direction on lowering of the bonnet (1).

2. A body according to claim 1, **characterised in that** the latching bolt (15) is further coupled to the actuator (3) via a traction cable (14).

3. A body according to claim 1 or claim 2, **characterised in that** both parts (23, 24; 28, 29) of the lever (11) are commonly swivellable about a pivot point (12) and **in that** the joint (25) is closer to a point of action of the torque exerted on the first part (24) on lifting of the bonnet (1) than to the pivot point (12).

4. A body according to claim 2, **characterised in that** a portion of the traction cable (14) acts on a point of action (13) of the lever (11).

5. A body according to claim 4, **characterised in that** the traction cable (14) extends from the bonnet latch (15, 16) beyond the portion to an unlocking lever (19).

6. A body according to claim 5, **characterised in that** the portion of the traction cable is freely displaceable towards the point of action (13) in a direction corresponding to unlocking of the bonnet latch (15, 16).

7. A body according to claim 6, **characterised in that** the point of action (13) is an eye through which is passed the traction cable (14), and **in that** the traction cable (14) comprises a thickened portion (18) entrained by the eye on extension of the actuator (3).

8. A body according to any one of the preceding claims, **characterised in that** the actuator (3) is reversible.

## Revendications

1. Carrosserie pour un véhicule à moteur avec un châssis et un capot (1) relié sur un premier côté (2) au châssis par une charnière (8) et sur un deuxième côté (4) par une serrure de capot (15, 16) et avec au moins un élément d'actionnement (3) qui peut être déployé en cas d'accident pour soulever le capot (1) et qui comprend une partie mobile (7, 10) se mettant en prise sur le premier côté (2) du capot (1), dans lequel une targette (15) de la serrure de capot (15, 16) est couplée à la partie mobile (7, 10) par un levier pivotant (11) pour déverrouiller la serrure de capot (15, 16) en cas de déploiement de l'élément d'actionnement (3), **caractérisée en ce que** le levier (11) comprend deux parties (23, 24 ; 28, 29) reliées de façon pivotante par une articulation (25 ; 12), dont la première (24 ; 29) transmet à la deuxième partie (23 ; 28) un couple exercé par la partie mobile (7, 10) de l'élément d'actionnement lorsque le capot moteur (1) est soulevé, par l'intermédiaire d'une butée de l'articulation (25 ; 12), et pivote dans l'articulation (25 ; 12) sous l'action d'un couple exercé dans la direction opposée lors de l'abaissement du capot (1).

2. Carrosserie selon la revendication 1, **caractérisée en ce que** la targette (15) est en outre couplée à l'élément d'actionnement (3) par un câble de traction (14).

3. Carrosserie selon la revendication 1 ou 2, **caractérisée en ce que** les deux parties (23, 24 ; 28, 29) du levier (11) peuvent pivoter ensemble autour d'un point de pivot (12) et **en ce que** l'articulation (25) est plus près du point d'application du couple exercé lorsque le capot moteur (1) est soulevé sur la première partie (24) que du point de pivot (12).

4. Carrosserie selon la revendication 2, **caractérisée en ce qu'**un tronçon du câble de traction (14) se met en prise sur un point de prise (13) du levier (11).

5. Carrosserie selon la revendication 4, **caractérisée en ce que** le câble de traction (14) s'étend à partir de la serrure de capot (15, 16) au-delà du tronçon jusqu'à un levier de déverrouillage (19).

6. Carrosserie selon la revendication 5, **caractérisée en ce que** le tronçon du câble de traction peut être déplacé librement vers le point de prise (13) dans une direction correspondant à un déverrouillage de la serrure de capot (15, 16).

7. Carrosserie selon la revendication 6, **caractérisée en ce que** le point de prise (13) est un oeillet à travers lequel le câble de traction (14) est passé et **en ce que** le câble de traction (14) présente un renflement (18) qui est entraîné par l'oeillet quand l'élément d'actionnement (3) se déploie.

8. Carrosserie selon l'une des revendications précédentes, **caractérisée en ce que** l'élément d'actionnement (3) est inversable.
